# EUROPEAN PATENT SPECIFICATION

(11) **EP 1 858 233 B1**
(45) Date of publication and mention of the grant of the patent: **14.04.2010**
(21) Application number: 06023841.7
(22) Date of filing: 16.11.2006
(51) Int. Cl.: H04M 1/02, H01M 2/10

(54) **Battery cover locking device and mobile terminal having the same**
Verschlussanordnung für eine Batterieeinheit eines Mobiltelefons, und Mobiltelefon
Dispositif de verrouillage pour un couvercle de batterie d'un téléphone portable, et téléphone portable

(30) Priority: 16.05.2006 KR 20060043975
(43) Date of publication of application: 21.11.2007
(73) Proprietor: LG Electronics Inc., Seoul 150-721 (KR)
(72) Inventor: Park, Sang-Yool, Nowon-Gu, Seoul (KR)
(74) Representative: Katérle, Axel

(56) References cited:
- EP-A- 0 944 122
- EP-A1- 0 716 461
- WO-A-2005/060116
- US-A- 5 586 184
- US-A- 5 895 729

## Description

### BACKGROUND OF THE INVENTION

### 1. Field of the Invention

The present invention relates to a battery cover locking device and a mobile terminal having the same.

### 2. Description of the Related Art

Generally, an electronic device such as a mobile terminal includes a battery mounted on a main body of the device. The battery may be a hard pack battery type or a soft pack battery type. The hard pack battery type corresponds to a battery and battery cover that are integrally formed. A terminal is also exposed outside of the battery cover. The soft pack battery corresponds to a battery and battery cover that are separately provided. In the soft pack battery, the terminal of the battery is formed on the battery regardless of the battery cover.

Further, the hard pack battery is easily attached to and detached from the main body of the electronic device, but is disadvantageously not compatible between different types or makes of electronic devices. Further, the soft pack battery is not as easily attached and detached from the main body of the electronic device, but is generally compatible with different types or makes of electronic devices.

In more detail, there are generally two methods of coupling the battery cover of the soft pack battery to the main body of the electronic device. The first method uses hooks formed at mutually corresponding portions of the main body of the electronic device and the battery cover such that the hooks couple with each other. The hooks may be disengaged by sliding the battery cover in a particular direction away from the main body. However, the user must slide the entire cover with a sufficiently strong force to slide the cover away from the main body.

The second method for coupling the battery cover to the main body uses a spring. That is, a locking mechanism elastically supported by the spring is formed on the main body. In addition, a hook to be coupled with the locking mechanism is formed on the battery cover. Thus, when the battery cover is attached to the main body, the locking mechanism engages with the hook to couple the battery cover to the main body. Further, the battery cover may be uncoupled from the main body by pushing the locking mechanism against the elastic force of the spring so that the hook releases from the locking mechanism.

However, in the second method, a sufficient space must be made in the main body to accommodate the spring. Thus, a slimness or thickness of the electronic device is limited by the space required for the spring. In addition, the battery cover is spaced a particular distance from the main body of the device to thereby accommodate a thickness of the battery. However, the shape and size of the locking mechanism formed in the main body of the device is predetermined. Therefore, when the locking mechanism is fabricated to fit one battery with a certain capacity, another type of battery will not properly fit in the device.

In addition, most components including the main body are fabricated using an injection molding process. However, the spring is not made using an injection molding process. Thus, because the spring is separately prepared, the cost of manufacturing the device increases. Further, because the locking mechanism is mounted at the main body, the user has to manipulate the locking mechanism with one hand and separate the battery cover from the main body with his or her other hand.

Document EP 0 716 461 A1 discloses an electronic appliance having a cover with a locking groove. A locking piece with a locking portion is arranged on the housing. The locking portion engages the locking groove. The cover is slidably mounted on the housing. The locking piece can be slid along a direction perpendicular to the sliding direction of the cover. By movement of the locking piece, the locking portion engages with the locking groove and fixes the cover. When the cover is fixed in this way and the locking piece is depressed downwardly, the locking portion is also moved downwardly. This produces a wedge effect between the locking portion and the locking groove and the cover is slid in the removal direction. As a consequence, the cover can be simply removed from the housing.

Document US 5,895,729 discloses a radio with battery assembly. The assembly includes a radio housing and a removable battery package attached to the radio housing. The battery package is secured to the radio housing via a lip portion on the radio and by a battery latch system. The battery latch system comprises a portion on the battery package and a portion on the radio housing.

Document WO 2005/060116 A2 discloses an MP3 player having a housing. A battery compartment in the housing is closed by a battery compartment lid. The lid comprises a pushbutton, which is arranged directly above a locking member. The locking member has two detents at its upper edge. At the inner side of lid there are two ribs, which in a closed position of the lid engage with the detents of the locking member and thus lock the lid in its closed position.

### SUMMARY OF THE INVENTION

Accordingly, one object of the present invention is to address the above-noted and other problems.

Another object of the present invention is to provide a battery cover locking device that is easy to use.

Yet another object of the present invention is to provide a battery cover locking device that can be made with an injection molding process.

Still another object of the present invention is to provide a battery cover locking device that does not require a spring nor a space to accommodate the spring and thereby reduce the thickness of the electronic device.

To achieve these and other advantages and in accordance with the purpose of the present invention, as embodied and broadly described herein, the present invention provides in one aspect a novel battery cover locking device including a battery cover configured to protect at least a portion of a battery detachably installed in a main body of an electronic device, a locking unit including a first locking mechanism disposed on the battery cover and a second locking mechanism disposed on the main body and in which the first and second locking mechanisms engage with each other to couple the battery cover to the main body, and an unlocking unit mounted on the battery cover and configured to release the battery cover from the main body by pressing against the second locking mechanism such that the first and second locking mechanisms disengage from each other. The present invention also provides a corresponding mobile terminal including the battery cover locking device.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIG. 1 is a front perspective view of a mobile terminal according to an embodiment of the present invention;

FIG. 2 is a rear perspective view of the mobile terminal in FIG. 1;

FIG. 3 is an exploded perspective view of a battery cover locking device according to an embodiment of the present invention;

FIG. 4 is an enlarged perspective view of a main body locking part in FIG. 3;

FIG. 5 is an enlarged perspective view of a cover locking part in FIG. 3;

FIG. 6 is a sectional view taken along the line VI-VI in FIG. 2 showing a coupled state of a main body and a battery cover; and

FIG. 7 is a sectional view showing a state in which the battery cover is about to be separated from the main body.

### DETAILED DESCRIPTION OF THE INVENTION

Reference will now be made in detail to the preferred embodiments of the present invention, examples of which are illustrated in the accompanying drawings.

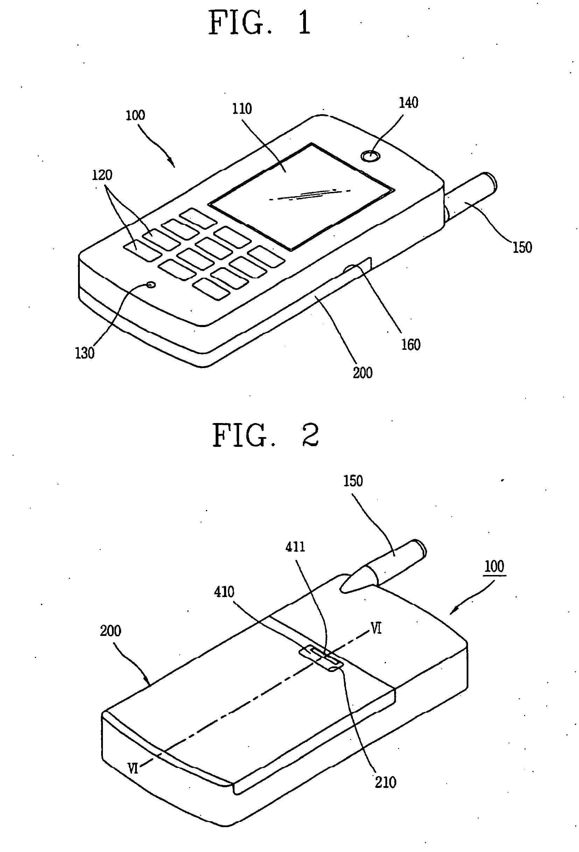

Turning first to FIG. 1, which is a front perspective view of a mobile terminal according to an embodiment of the present invention. As shown, the mobile terminal includes a main body 100 and a battery cover 200 detachably coupled with the main body 100. In this example, the mobile terminal is a bar type mobile terminal. However, a flip type, folding type or sliding type mobile terminal may also be used.

As shown in FIG. 1, the main body 100 includes a display 110 at an upper front side portion and input units 120 at a lower front side portion. The display 110 outputs visual information and can be, for example, an LCD (Liquid Crystal Display). Further, the input units 120 allow a user to input various numbers and characters to a control unit (not shown) included in the main body 100, and can be, for example, key buttons that generate signals when being pressed. A microphone 130 and a speaker 140 are also mounted at a certain position on the main body 100 to input and output a sound, respectively. The mobile terminal also includes an antenna 150 for transmitting and receiving information in a communication network.

Further, the main body 100 has a battery receiving part 160 on a rear portion for receiving a battery (not shown in FIG. 1). The battery cover 200 is detachably coupled with the main body 100 and covers and protects the battery mounted in the battery receiving part 160. Further, the battery cover 200 is detachably coupled to the main body 100 via a battery cover locking device according to an embodiment of the present invention.

In more detail, FIG. 2 illustrates such a battery cover locking device. As shown, the battery locking device includes an operation knob 410 mounted on the battery cover 200 and that is exposed through an operation hole 210 of the battery cover 200. Further, the operation knob 410 includes an operation groove 411 so that a user can insert his or her fingernail and press the operation knob 410 to simultaneously detach the battery cover 200 from the main body 100 of the mobile terminal.

In addition, as also shown in FIG. 2, the position of the operation knob 410 is below an upper edge of battery cover 200 and is centered longitudinally along the batter cover 200. Further, the operation knob 410 is exposed through the operation hole 210 of the battery cover 200. The position of the operation knob 410 and the operation hole 210 allow the user to easily open the battery cover 200 from the main body 100.

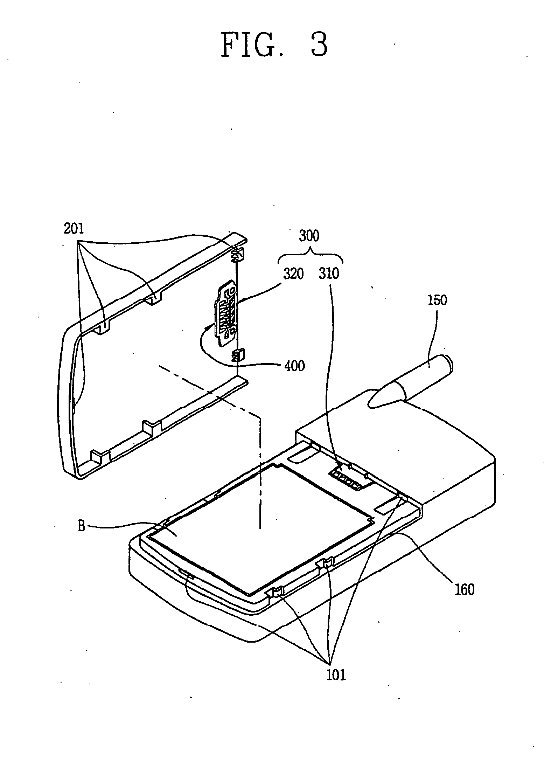

Turning next to FIG. 3, which is an exploded perspective view of the battery cover locking device according to an embodiment of the present invention. As shown, the battery cover locking device includes a locking unit 300 and an unlocking unit 400. Further, a battery (B) in mounted in the receiving part 160 so as to be electrically connected with the main body 100. In addition, the main body 100 includes at least one fastening recess 101 formed at portions of the battery receiving part 160. Similarly, the battery cover 200 includes at least one fastening protrusion 201 corresponding to the at least one fastening recess 101. The at least one fastening recess 101 and the at least one fastening protrusion 201 engage with each other to thereby help maintain the coupled state of the main body 100 and the battery cover 200.

In addition, as shown in FIG. 3, the locking unit 300 includes a main body locking part 310 formed at the main body 100 and a cover locking part 320 formed on the battery cover 200. The main body locking part 310 and the cover locking part 320 may be formed integrally with the main body 100 and the battery cover 200, respectively. Thus, in accordance with an embodiment of the present invention, because the locking parts 310 and 320 may be integrally formed with the main body 100 and battery cover 200, respectively, a same injection molding process may be used to form each part. This simplifies the manufacturing process and reduces the manufacturing costs.

In addition, the locking parts 310 and 320 engage with each other to thereby couple the battery cover 200 with the main body 100. Thus, the battery B is secured to the main body 100. Further, the unlocking unit 400 is mounted on the battery cover 200 and is operated to release the battery cover 200 from the main body 100. That is, when the user presses the unlocking unit 400, the unlocking unit 400 presses the main body locking part 310 to thereby deform the main body locking part 310 and move the cover locking part 320 away from the main body locking part 310. Accordingly, the unlocking unit 400 unlocks the main body locking part 310 and the cover locking part 320 to thereby allow the battery cover 200 to be separated from the main body 100.

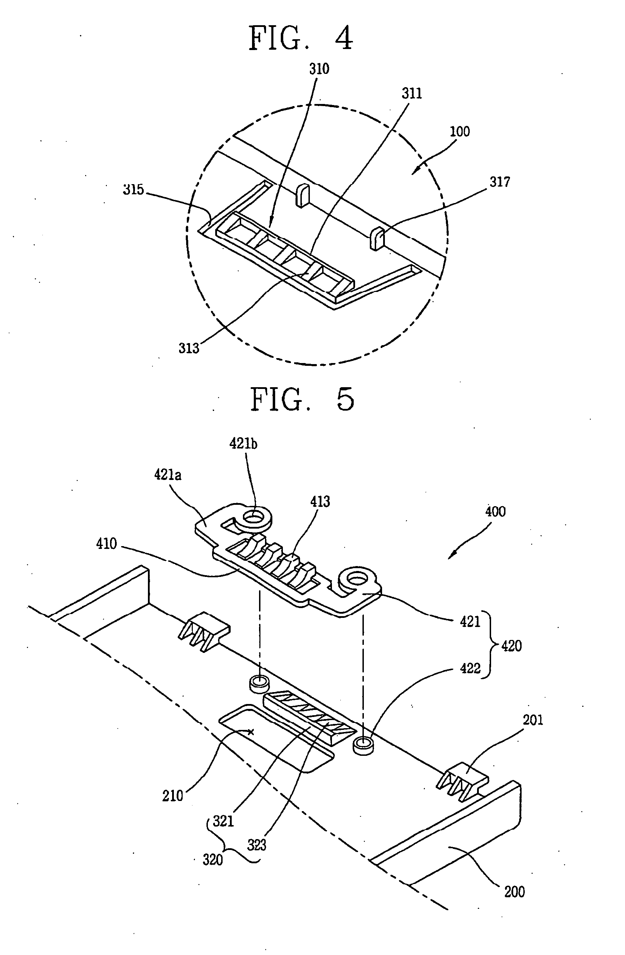

The locking unit 300 and the unlocking unit 400 will now be described in more detail with reference to FIGs. 4 and 5, respectively. That is, FIGs. 4 and 5 are enlarged perspective views of the main body locking part 310 and the cover locking part 320 in FIG. 3, respectively. As shown in FIG. 4, the main body locking part 310 includes a main body protrusion wall 311 extending along a widthwise direction of the main body 100. The locking part 310 also includes a support 313 having at least one support rib formed in a direction substantially perpendicular to the main body protrusion wall 311. The support 313 including the at least one support rib strengthens the main body protrusion wall 311.

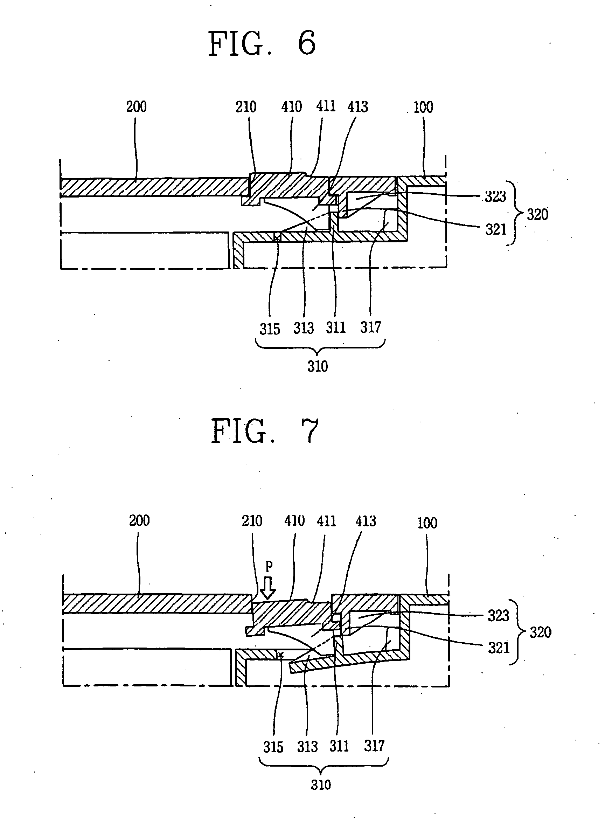

Further, as shown in FIG. 4, the main body locking part 310 also includes a displacement slit 315 surrounding a partial circumference of the main body locking part 310. The displacement slit 315 allows the main body part 310 to be flexibly moved. This feature will be discussed in more detail with respect to FIGs. 6 and 7. As shown in FIG. 4, the main body locking part 310 also includes at least one support protrusion 317 formed at a portion where the main body 100 and the main body locking part 310 are connected. That is, the at least one support protrusion 317 strengthens the connection portion between the main body 100 and the main body locking part 310. The support protrusions 317 also support the battery cover 200 coupled with the main body 100.

In addition, as shown in FIGs. 3 and 5, the cover locking part 320 is formed at an end portion of the battery cover 200 where the fastening protrusions 201 are formed. As shown in FIG. 5, the cover locking part 320 includes a cover protrusion wall 321 formed along the widthwise direction of the battery cover 200. The protrusion wall 321 corresponds to and engages with the main body protrusion wall 311. Further, the cover locking part 320 also includes a support 323 having at least one support rib protruding from the battery cover 200 in a direction substantially perpendicular to the cover protrusion wall 321. Similar to the at least one support rib 313 of the main body locking part 310, the at least one support rib 323 strengthens the cover protrusion wall 321.

In addition, FIG. 5 also illustrates the operation knob 410 that a user can press to unlock the cover 200 from the main body 100. That is, the operation knob 410 presses the main body locking part 310 so the main body locking part 310 separates from the cover locking part 320. Further, the operation knob 400 is exposed through the operation hole 210 of the battery cover 200.

The unlocking unit 400 also includes at least one pressing protrusion 413 formed as part of the operation knob 410. Thus, when the user presses the operation knob 410, the at least one pressing protrusion 413 presses the main body locking part 310 so as to separate the cover 200 from the main body 100. In addition, the size of the at least one pressing protrusion 413 is determined based on a distance between the battery cover 200 and the main body locking part 310.

Therefore, because the thickness of the batter cover 200 is variably set based on whether the battery cover 200 is for a small capacity battery or a large capacity battery, the size of the at least one pressing protrusion 413 can be similarly set to accommodate the specific type of battery cover 200. In addition, as shown in FIG. 5, the at least one pressing protrusion 413 includes a plurality of pressing protrusions 413 arranged at uniform intervals to fit between a plurality of support ribs 313 of the main body locking part 310.

Further, the unlocking unit 400 also includes a coupling part 420 used to elastically couple the operation knob 410 to the battery cover 200 in a pressing manner. As shown, the coupling part 420 includes at least one tension part 421 extending from the operation knob 410 and coupling ribs 422 for coupling the tension part 421 to the battery cover 200. In addition, in the example shown in FIG. 5, the tension part 421 includes a pair of tension parts 421 extending from both sides of the operation knob 410. Also, the tension part 421 preferably includes a bent portion 421a at a position in the extending direction to facilitate elastically deforming the tension part 421 so the tension part 421 returns to its original state after the operation knob 410 was pressed.

As shown in FIG. 5, the coupling part 420 also includes a coupling hole 421 b formed at end portions of the tension part 421 and into which the coupling ribs 422 are inserted. That is, the coupling ribs 422 of the battery cover 200 are inserted into the coupling holes 421 b of the tension part 421 so as to couple the operation knob 410 to the battery cover 200. Also, the unlocking unit 400 is preferably integrally formed using an injection molding process. In other words, the operation knob 410 and the tension part 421 are integrally formed, and the coupling ribs 422 are integrally formed with the battery cover 200.

Accordingly, because the tension part 421 provides an elastic force for displacing the operation knob 410, an elastic member such as a spring is not necessary. In addition, because the unlocking unit 400 is integrally formed, the manufacturing process is simplified. Moreover, because a separate spring is not required, a space for securing a stroke of the spring can be omitted. Thus, the main body 100 can have a thin shape.

A method for coupling and separating the battery cover locking device will now be described with reference to FIGs. 6 and 7. That is, FIGs. 6 and 7 are sectionals view taken along the line VI-VI in FIG. 2 showing a coupled and about to be uncoupled state of the main body 100 and the battery cover 200, respectively.

When the battery cover 200 is coupled with the main body 100, the fastening recesses 101 and the fastening protrusions 201 (see FIG. 3) are fastened with each other. Further, as shown in FIG. 6, the cover protrusion wall 321 passes over the support 313 of the main body locking part 310 and engages with the main body protrusion wall 311. Thus, because the cover locking part 320 engages with the main body locking part 310 and the fastening recesses 101 are fastened to the fastening protrusions 201, the battery cover 200 and the main body 100 are coupled together.

As shown in FIG. 7, when a user wants to remove the battery cover 200 from the main body 100, he or she can press the operation knob 410. That is, when the operation knob 410 is pressed in the pressing direction (P), the battery cover 200 is separated from the main body 100. Then, the user can grasp the main body 100 with one hand, and insert their thumb or other finger into the operation groove 411 of the operation knob 410 to completely remove the battery cover 200 from the main body 100.

In more detail, when the operation knob 410 is pressed, the pressing protrusions 413 press the main body locking part 310. As discussed above, the pressing protrusions 413 are aligned between the support ribs of the support 313. Then, the main body locking part 310 makes a cantilever motion centering on the portion where the support protrusion 317 is formed, and the main body protrusion wall 311 moves gyratorily away from the cover body protrusion wall 321. Accordingly, the user can remove the battery cover 200 from the main body 100.

In addition, in the above description, the main body protrusion wall 311 and the cover protrusion wall 321 are formed at corresponding portions of the main body locking part 310 and the cover locking part 320. However, it is also possible not to form the main body protrusion wall 311 and the cover protrusion wall 321, and rather have the supports 313 and 323 engage with each other. Also, the operation knob 410 and the tension part 421 are preferably made of plastic. However, these parts may also be made of a different material such as a metal that has a sufficient elasticity.

As so far described, the user can advantageously detach the battery cover from the main body using only one hand, because the unlocking unit is mounted on the battery cover, Further, the unlocking unit can be fabricated to have a different size corresponding to each battery cover that can be different depending on a battery capacity. Thus, regardless of the size of the battery cover, the structural coupling of the main body and the battery cover can be optimally achieved.

Moreover, because the operation knob and the tension part are fabricated using an injection-molding process with a plastic resin, a separate spring is not necessary. Thus, a separate space for supporting the spring is not required and the main body can be made to have a slim shape. In addition, because the tension part provides the appropriate elastic force rather than a separate spring, the operation knob can be pressed to remove the battery cover from the main body. Further, because the battery unlocking unit is formed on the cover 200 rather than the main body 100, the main body 100 can be made to have a slim shape.

In addition, in the above-examples, the electronic device was described as a mobile terminal. However, the electronic device may also be a camera, an MP3 player, a PDA (Personal Digital Assistant), etc. That is, any electronic device can be manufactured to include the novel locking device of the present invention.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A mobile terminal, comprising:
a main body (100);
a battery cover (200) configured to protect at least a portion of a battery (B) detachably installed in the main body; and
a battery cover locking device for detachably coupling the battery cover to the main body,
wherein the battery cover locking device comprises:
a locking unit (300) including a first locking mechanism (320) disposed on the battery cover and a second locking mechanism (310) disposed on the main body,
wherein the first and second locking mechanisms engage with each other to couple the battery cover to the main body (100); and
an unlocking unit (400) mounted on the battery cover and configured to release the battery cover from the main body by pressing the second locking mechanism such that the first and second locking mechanisms disengage from each other, wherein the second locking mechanism is configured to perform a cantilever motion when the second locking mechanism is pressed by the unlocking unit.

2. The mobile terminal of claim 1, wherein the first locking mechanism (320) comprises:
a cover protrusion wall extending along a widthwise direction of the battery cover (200).

3. The mobile terminal of claim 2, wherein the first locking mechanism .(320) further comprises:
at least one support rib protruding from the battery cover (200) in a direction substantially perpendicular to the cover protrusion wall and being connected to the cover protrusion wall.

4. The mobile terminal of claim 2, wherein the second locking mechanism (310) comprises:
a main body (100) protrusion wall extending along a widthwise direction of the main body (100); and
a displacement slit surrounding a partial circumference of the second locking mechanism (310) and configured to allow the second locking mechanism (310) to be flexibly moved such that the cantilever motion can be implemented.

5. The mobile terminal of claim 4, wherein the second locking mechanism (310) further comprises:
at least one support rib protruding from the main body (100) in a direction substantially perpendicular to the main body (100) protrusion wall and being connected to the main body (100) protrusion wall.

6. The mobile terminal of claim 4, wherein the cover protrusion wall of the first locking mechanism (320) corresponds to and engages with the main body (100) protrusion wall of the second locking mechanism (310) to thereby engage the first and second locking mechanisms (310).

7. The mobile terminal of claim 1, wherein the unlocking unit (400) comprises:
an operation knob mounted on the battery cover (200) and configured to be exposed outside the battery cover (200) through an operation hole of the battery cover (200); and
a coupling member configured to couple the operation knob to the battery cover (200) such that the operation knob is elastically biased against and moveable with respect to the battery cover (200),
wherein the operation knob is configured to exert a biasing force against the second locking mechanism (310) to disengage the second locking mechanism (310) from the first locking mechanism (320) when a predetermined force is exerted on the operation knob.

8. The mobile terminal of claim 7, wherein the coupling member comprises:
at least one tension part having a first end extending from the operation knob; and
at least one coupling rib protruding from the battery cover (200) and configured to be coupled with a second end of the at least one tension part.

9. The mobile terminal of claim 8, wherein the second end of the at least one tension part includes a coupling hole configured to be insertedly coupled to the at least one coupling rib.

10. The mobile terminal of claim 7, wherein the operation knob includes at least one protruding member configured to face the second locking mechanism (310) and to elastically bias against the second locking mechanism (310) when a certain force is exerted on the operation knob.

## Patentansprüche

1. Mobiles Endgerät, umfassend:
einen Hauptkörper (100),
eine Batterieabdeckung (200), welche dazu ausgelegt ist, mindestens einen Teil einer herausnehmbar in den Hauptkörper eingesetzten Batterie (B) zu schützen, und
eine Batterieabdeckungsverriegelungsvorrichtung zur lösbaren Kopplung der Batterieabdeckung mit dem Hauptkörper,
wobei die Batterieabdeckungsverriegelungsvorrichtung umfasst:
eine Verriegelungseinheit (300) mit einem an der Batterieabdeckung angeordneten ersten Verriegelungsmechanismus (320) und einem an dem Hauptkörper angeordneten zweiten Verriegelungsmechanismus (310), wobei der erste und der zweite Verriegelungsmechanismus ineinander eingreifen, um die Batterieabdeckung mit dem Hauptkörper (100) zu koppeln, und
eine an der Batterieabdeckung angebrachte Entriegelungseinheit (400), welche dazu ausgelegt ist, die Batterieabdeckung von dem Hauptkörper durch Drücken auf den zweiten Verriegelungsmechanismus zu lösen, derart, dass der erste und der zweite Verriegelungsmechanismus außer Eingriff gelangen, wobei der zweite Verriegelungsmechanismus dazu eingerichtet ist, eine Cantilever-Bewegung auszuführen, wenn der zweite Verriegelungsmechanismus durch die Entriegelungseinheit gedrückt wird.

2. Mobiles Endgerät nach Anspruch 1, wobei der erste Verriegelungsmechanismus (320) eine vorstehende Abdeckwand aufweist, welche längs einer Breitenrichtung der Batterieabdeckung (200) verläuft.

3. Mobiles Endgerät nach Anspruch 2, wobei der erste Verriegelungsmechanismus (320) ferner mindestens eine Stützrippe aufweist, welche von der Batterieabdeckung (200) in einer Richtung im Wesentlichen senkrecht zu der vorstehenden Abdeckwand absteht und mit der vorstehenden Abdeckwand verbunden ist.

4. Mobiles Endgerät nach Anspruch 2, wobei der zweite Verriegelungsmechanismus (310) umfasst:
eine abstehende Wand des Hauptkörpers (100), welche sich längs einer Breitenrichtung des Hauptkörpers (100) erstreckt, und
einen Verlagerungsschlitz, welcher einen Teilumfang des zweiten Verriegelungsmechanismus (310) umgibt und dazu ausgelegt ist, dem zweiten Verriegelungsmechanismus (310) eine flexible Bewegung zu ermöglichen, sodass die Cantilever-Bewegung ausgeführt werden kann.

5. Mobiles Endgerät nach Anspruch 4, wobei der zweite Verriegelungsmechanismus (310) ferner mindestens eine Stützrippe aufweist, welche von dem Hauptkörper (100) in einer Richtung im Wesentlichen senkrecht zur verstehenden Wand des Hauptkörpers (100) absteht und mit der vorstehenden Wand des Hauptkörpers (100) verbunden ist.

6. Mobiles Endgerät nach Anspruch 4, wobei die vorstehende Abdeckwand des ersten Verriegelungsmechanismus (300) zu der vorstehenden Wand des Hauptkörpers (100) des zweiten Verriegelungsmechanismus (310) korrespondiert und mit dieser in Eingriff steht, um hierdurch den ersten und den zweiten Verriegelungsmechanismus (310) in Eingriff zu bringen.

7. Mobiles Endgerät nach Anspruch 1, wobei die Entriegelungseinheit (400) umfasst:
einen an der Batterieabdeckung (200) angebrachten Bedienknopf, welcher dazu ausgebildet ist, durch ein Bedienloch der Batterieabdeckung (200) hindurch aus der Batterieabdeckung (200) herauszustehen, und
ein Kopplungselement, welches dazu ausgebildet ist, den Bedienknopf derart mit der Batterieabdeckung (200) zu koppeln, dass der Bedienknopf elastisch gegen die Batterieabdeckung (200) vorgespannt ist und relativ zu dieser beweglich ist,
wobei der Bedienknopf dazu ausgebildet ist, eine Vorspannkraft auf den zweiten Verriegelungsmechanismus (310) auszuüben, um den zweiten Verriegelungsmechanismus (310) außer Eingriff mit dem ersten Verriegelungsmechanismus (320) zu bringen, wenn eine vorbestimmte Kraft auf den Bedienknopf ausgeübt wird.

8. Mobiles Endgerät nach Anspruch 7, wobei das Kopplungselement umfasst:
mindestens einen Spannteil mit einem sich vom Bedienknopf erstreckenden ersten Ende und
mindestens eine von der Batterieabdeckung (200) abstehende Kopplungsrippe, welche dazu ausgelegt ist, mit einem zweiten Ende des mindestens einen Spannteils gekoppelt zu werden.

9. Mobiles Endgerät nach Anspruch 8, wobei das zweite Ende des mindestens einen Spannteils ein Kupplungsloch aufweist, welches dazu ausgelegt ist, mit der mindestens einen Kupplungsrippe durch Einstecken gekoppelt zu werden.

10. Mobiles Endgerät nach Anspruch 7, wobei der Bedienknopf mindestens ein vorstehendes Element aufweist, welches dazu ausgelegt ist, dem zweiten Verriegelungsmechanismus (310) zugewandt zu sein und eine elastische Vorspannung auf den zweiten Verriegelungsmechanismus (310) auszuüben, wenn eine bestimmte Kraft auf den Bedienknopf ausgeübt wird.

## Revendications

1. Terminal mobile, comprenant :
un corps principal (100) ;
un couvercle de batterie (200) configuré pour protéger au moins une partie d'une batterie (B) installée de façon amovible dans le corps principal ; et
un dispositif de verrouillage de couvercle de batterie pour coupler de façon amovible le couvercle de batterie au corps principal,
dans lequel le dispositif de verrouillage de couvercle de batterie comprend :
une unité de verrouillage (300) incluant un premier mécanisme de verrouillage (320) disposé sur le couvercle de batterie et un deuxième mécanisme de verrouillage (310) disposé sur le corps principal, dans lequel le premier et le deuxième mécanismes de verrouillage s'engagent l'un avec l'autre pour coupler le couvercle de batterie au corps principal (100) ; et
une unité de déverrouillage (400) montée sur le couvercle de batterie et configurée pour libérer le couvercle de batterie du corps principal en appuyant sur le deuxième mécanisme de verrouillage de telle sorte que le premier et le deuxième mécanismes de verrouillage se désengagent l'un de l'autre, dans lequel le deuxième mécanisme de verrouillage est configuré pour exécuter un mouvement en porte-à-faux lorsque le deuxième mécanisme de verrouillage est pressé par l'unité de déverrouillage.

2. Terminal mobile selon la revendication 1, dans lequel le premier mécanisme de verrouillage (320) comprend :
une paroi en saillie de couvercle s'étendant dans un sens de la largeur du couvercle de batterie (200).

3. Terminal mobile selon la revendication 2, dans lequel le premier mécanisme de verrouillage (320) comprend en outre :
au moins une nervure de support faisant saillie du couvercle de batterie (200) dans un sens substantiellement perpendiculaire à la paroi en saillie de couvercle et étant connectée à la paroi en saillie de couvercle.

4. Terminal mobile selon la revendication 2, dans lequel le deuxième mécanisme de verrouillage (310) comprend :
une paroi en saillie de corps principal (100) s'étendant dans un sens de la largeur du corps principal (100) ; et
une fente de déplacement entourant une circonférence partielle du deuxième mécanisme de verrouillage (310) et configurée pour permettre que le deuxième mécanisme de verrouillage (310) soit déplacé de manière flexible de façon à ce que le mouvement en porte-à-faux puisse être mis en oeuvre.

5. Terminal mobile selon la revendication 4, dans lequel le deuxième mécanisme de verrouillage (310) comprend en outre :
au moins une nervure de support faisant saillie du corps principal (100) dans un sens substantiellement perpendiculaire à la paroi en saillie de corps principal (100) et étant connectée à la paroi en saillie de corps principal (100).

6. Terminal mobile selon la revendication 4, dans lequel la paroi en saillie de couvercle du premier mécanisme de verrouillage (320) correspond à et s'engage avec la paroi en saillie de corps principal (100) du deuxième mécanisme de verrouillage (310) pour ainsi engager le premier et le deuxième mécanismes de verrouillage (310).

7. Terminal mobile selon la revendication 1, dans lequel l'unité de déverrouillage (400) comprend :
un bouton opérationnel monté sur le couvercle de batterie (200) et configuré pour être exposé à l'extérieur du couvercle de batterie (200) à travers un trou opérationnel du couvercle de batterie (200) ; et
un élément de couplage configuré pour coupler le bouton opérationnel au couvercle de batterie (200) de telle sorte que le bouton opérationnel est poussé de façon élastique contre le et mobile par rapport au couvercle de batterie (200),
dans lequel le bouton opérationnel est configuré pour exercer une force de poussée contre le deuxième mécanisme de verrouillage (310) afin de désengager le deuxième mécanisme de verrouillage (310) du premier mécanisme de verrouillage (320) lorsqu'une force prédéterminée est exercée sur le bouton opérationnel.

8. Terminal mobile selon la revendication 7, dans lequel l'élément de couplage comprend :
au moins une partie de tension ayant une première extrémité s'étendant à partir du bouton opérationnel ; et
au moins une nervure de couplage faisant saillie du couvercle de batterie (200) et configurée pour être couplée avec une deuxième extrémité de l'au moins une partie de tension.

9. Terminal mobile selon la revendication 8, dans lequel la deuxième extrémité de l'au moins une partie de tension inclut un trou de couplage configuré pour être couplé par insertion à l'au moins une nervure de couplage.

10. Terminal mobile selon la revendication 7, dans lequel le bouton opérationnel inclut au moins un élément en saillie configuré pour faire face au deuxième mécanisme de verrouillage (310) et pour pousser de manière élastique contre le deuxième mécanisme de verrouillage (310) lorsqu'une certaine force est exercée sur le bouton opérationnel.
